# EUROPÄISCHE PATENTSCHRIFT

(11) **EP 2 511 581 B1**
(45) Veröffentlichungstag und Bekanntmachung des Hinweises auf die Patenterteilung: **05.06.2013**
(21) Anmeldenummer: 11305422.5
(22) Anmeldetag: 11.04.2011
(51) Int. Cl.: F16L 25/00, F16L 33/26, H01P 1/04

(54) **Anordnung mit einem metallischen Rohr und einem Verbindungselement sowie Verfahren zur Montage des Verbindungselements**
Assembly with a metallic pipe and a connecting element and method for mounting the connecting element
Dispositif avec un tuyau métallique et un élément de liaison et procédé de montage de l'élélment

(43) Veröffentlichungstag der Anmeldung: 17.10.2012
(73) Patentinhaber: Nexans, 75008 Paris (FR)
(72) Erfinder: Di Palma, Michele, 31832, Springe (DE); Lange, Stephan, 30900, Wedemark (DE); Dipl.-Ing. Schippl, Klaus, 30659, Hannover (DE); Dr.-Ing. Frohne, Christian, 30657, Hannover (DE)
(74) Vertreter: Döring, Roger

(56) Entgegenhaltungen:
- EP-A2- 1 783 413
- DE-A1- 2 126 871
- FR-A- 1 211 214

## Beschreibung

Die Erfindung bezieht sich auf eine Anordnung mit einem schraubenlinienförmig gewellten Rohr aus Metall, das eine entlang eines Schraubengangs seiner Wellung verlaufende Stirnfläche hat, und einem an demselben zu befestigenden Verbindungselement, welches ein aus Metall bestehendes Rohrstück aufweist, das eine dem Schraubengang der Wellung des Rohres entsprechende, schraubenlinienförmig verlaufende Innenfläche und eine glatte, zylindrische Außenfläche hat und in Montageposition unter Eingriff in die Wellung des Rohres auf demselben angeordnet ist, sowie auf ein Verfahren zur Montage des Verbindungselements (DEC-21 26 871).

Quer zu ihrer Längsrichtung gewellte Rohre aus Metall sind seit langem bekannt. Sie werden beispielsweise als elektrische Leiter von Hochfrequenz-Kabeln, als Umhüllung für elektrische und optische Kabel, in Kryostaten für supraleitfähige Kabel oder zum Transport von flüssigen oder gasförmigen Medien eingesetzt. Wegen des wellenförmigen Verlaufs der Wandung des Rohres sind zu seiner Weiterverbindung spezielle Anschlüsse erforderlich. Solche Anschlüsse sind bei ringförmig gewellten Rohren noch relativ einfach aufgebaut. Schwieriger ist das bei schraubenlinienförmig gewellten Rohren, weil bei einem Radialschnitt durch ein solches Rohr zusätzlich eine exzentrisch zur Mittelachse des Rohres liegende, gegebenenfalls unrunde Stirnfläche entsteht.

Bei dem bekannten Verbindungselement nach der eingangs erwähnten DE-C-21 26 871 ist auf das Ende eines schraubenlinienförmig gewellten Rohres ein Haltering aufgeschraubt, der eine schraubenlinienförmige Innenfläche und eine zylindrische Außenfläche hat. Der Haltering liegt in Montageposition an einer radial nach außen gebogenen, entlang eines Schraubengangs verlaufenden Bördelkante des Rohres an.

Dazu hat der Haltering eine dem Verlauf der Bördelkante entsprechende, entlang eines Schraubengangs verlaufende Stirnfläche. Auf den Haltering ist in Montageposition eine hülsenartige Armatur aufgesteckt, die in ihrem Inneren eine dem Verlauf der Bördelkante entsprechende Anlagefläche hat und die in Montageposition an der Bördelkante anliegt. Dieses Verbindungselement ist insgesamt aufwendig gestaltet und für einen stabilen Anschluß von weiterführenden Bauteilen nicht geeignet.

Der Erfindung liegt die Aufgabe zugrunde, das eingangs geschilderte Verbindungselement so zu gestalten, daß es mit stabilem Festsitz an einem schraubenlinienförmig gewellten Rohr angebracht werden kann.

Diese Aufgabe wird gemäß der Erfindung dadurch gelöst,
- daß in Montageposition ein metallischer Ring unter Anlage an dem Rohrstück auf demselben angeordnet und mit demselben verschweißt ist, dessen Innenfläche zwei axial hintereinander angeordnete Abschnitte mit unterschiedlichem Innendurchmesser aufweist,
- daß der Ring mit seinem den größeren Innendurchmesser aufweisenden Abschnitt auf dem Rohrstück und mit seinem den kleineren Innendurchmesser aufweisenden Abschnitt auf der der Stirnfläche des Rohres zugewandten Seite des Rohrstücks auf dem Rohr aufliegt,
- daß der Abschnitt des Rings mit dem kleineren Innendurchmesser eine dem Verlauf des Schraubengangs des Rohrs entsprechende, entlang einer Schraubenlinie verlaufende Stirnfläche hat und
- daß der Ring an seiner schraubenlinienförmig verlaufenden Stirnfläche mit der Stirnfläche des Rohres verschweißt ist.

Zur Montage des Verbindungselements werden gemäß der Erfindung folgende Verfahrensschritte durchgeführt:
a) Das Rohr wird an einem Ende entlang eines Schraubengangs abgetrennt, mit einem den Anfang und das Ende des Schraubengangs nach einem Umlauf verbindenden Schnitt in axialer Richtung;
b) Auf das Rohr wird ein mit einer schraubenlinienförmig verlaufenden Innenfläche versehenes Rohrstück aus Metall aufgeschraubt, das eine glatte, zylindrische Außenfläche hat;
c) Auf das Rohrstück wird ein zwei Abschnitte mit unterschiedlichem Innendurchmesser aufweisender, metallischer Ring mit seinem im Durchmesser größeren Abschnitt aufgeschoben, der mit seinem im Durchmesser kleineren Abschnitt auf dem Rohr aufliegt und an diesem Abschnitt eine einem Schraubengang des Rohres entsprechende, entlang einer Schraubenlinie verlaufende Stirnfläche hat;
d) Der Ring wird an seiner schraubenlinienförmig verlaufenden Stirnfläche mit der Stirnfläche des Rohres verschweißt;
e) Der Ring wird mit dem Rohrstück verschweißt.

Das Rohrstück und der Ring dieses Verbindungselements liegen außerhalb des gewellten Rohres, so daß dessen lichter Querschnitt durch beide Teile nicht eingeengt wird. Da der Ring sowohl mit dem gewellten Rohr als auch mit dem Rohrstück verschweißt ist, ergibt sich ein mechanisch stabiles und fest mit dem gewellten Rohr verbundenes Verbindungselement. Wenn das Rohrstück nach dem Verschweißen des Rings mit dem Rohr in Richtung des Endes des gewellten Rohres gedreht bzw. geschoben wird, dann wird die Flanke des Gewindes an seiner Innenfläche gegen die Wandung der korrespondierenden Wellung des Rohres gedrückt. Wenn Ring und Rohrstück dann miteinander verschweißt werden, ist der Festsitz von Ring und Rohrstücks auf dem Rohr weiter verbessert.

Ein Ausführungsbeispiel des Erfindungsgegenstandes ist in den Zeichnungen dargestellt.

Es zeigen:
Fig. 1 in schematischer Darstellung ein am Ende eines schraubenlinienfömig gewellten metallischen Rohres angebrachtes Verbindungselement nach der Erfindung.
Fig. 2 einen Querschnitt durch Fig. 1.
Fig. 3 eine Draufsicht auf die Stirnfläche des Verbindungselements.
Fig. 4 eine Einzelheit des Verbindungselements in vergrößerter Darstellung.

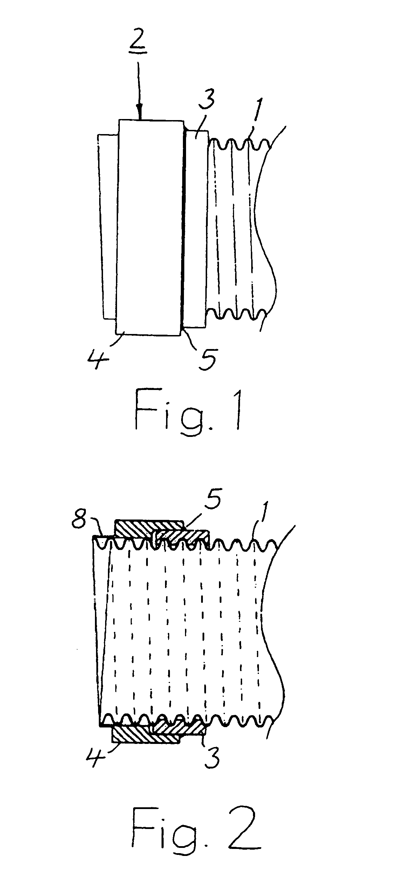

In Fig. 1 ist das Ende eines Rohres 1 aus Metall dargestellt, das mit einer quer zu seiner Achse entlang einer Schraubenlinie verlaufenden Wellung versehen ist. Das Rohr 1 besteht mit Vorteil aus Stahl, insbesondere aus Edelstahl, oder aus Kupfer. An dem Rohr 1 ist ein Verbindungselement 2 befestigt, das zum Anschluß weiterführender Bauteile dient.

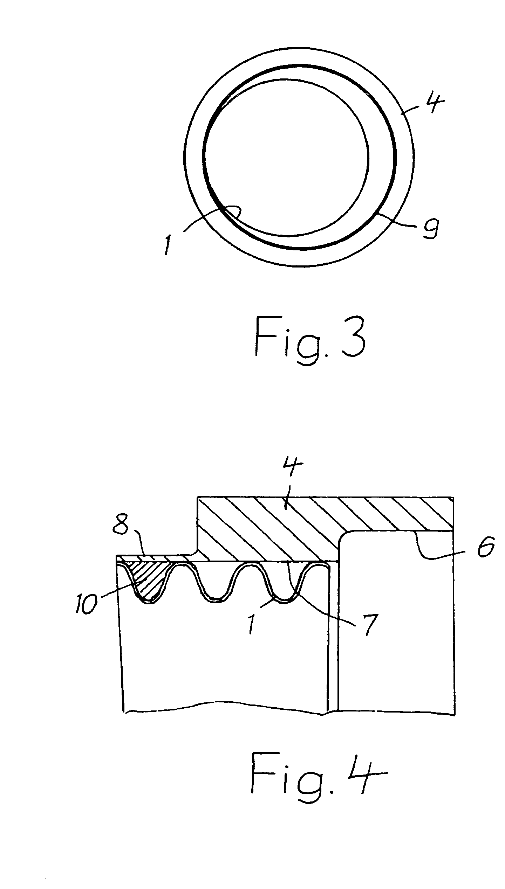

Das Verbindungselement 2 besteht ebenfalls aus Metall, insbesondere aus Edelstahl. Es weist ein mit einem Innengewinde und einer glatten, zylindrischen Außenfläche versehenes Rohrstück 3 und einen Ring 4 auf. Rohrstück 3 und Ring 4 sind in Montageposition an der Stelle 5 umlaufend miteinander verschweißt. Das Innengewinde des Rohrstücks 3 entspricht dem schraubenlinienförmigen Verlauf der Wellung des Rohres 1. Der Ring 4 ist in seinem Inneren abgestuft. Dadurch sind gemäß der Darstellungen in Fig. 4 ein Abschnitt 6 mit einem größeren Innendurchmesser und ein Abschnitt 7 mit einem kleineren Innendurchmesser gebildet. Der Innendurchmesser des Abschnitts 6 entspricht dem Außendurchmesser des Rohrstücks 3, während der Innendurchmesser des Abschnitts 7 dem Außendurchmesser des Rohres 1 entspricht.

Der Ring 4 hat an seinem Ende auf der Seite des Abschnitts 7 mit Vorteil einen Ansatz 8 mit gegenüber seinen sonstigen Abmessungen wesentlich verminderter Wandstärke, aber mit gleichem Innendurchmesser wie der Abschnitt 7. Die Stirnfläche des Ansatzes 8 verläuft deckungsgleich zur Stirnfläche des Rohres 1 entlang einer Schraubenlinie. Rohr 1 und Ring 4 sind in Montageposition an ihren Stirnflächen mittels einer umlaufenden Schweißnaht 9 miteinander verschweißt.

Zur Montage des Verbindungselements 2 auf einem gewellten Rohr 1 wird zunächst das Rohrstück 3 bis zu einer vorgegebenen Position auf das Rohr 1 aufgeschraubt. Anschließend wird der Ring 4 auf das Rohr 1 und das Rohrstück 3 aufgeschoben, und zwar so weit, bis die Stirnfläche seines Ansatzes 8 mit der Stirnfläche des Rohres 1 fluchtet. Rohr 1 und Ring 4 werden dann entlang der Schweißnaht 9 (Fig. 3) an ihren Stirnflächen miteinander verschweißt. Danach wird das Rohrstück 3 gegebenenfalls in Richtung des Endes des Rohres 1 zurückgedreht bzw. zurückgeschoben, bis es an der durch die Abstufung des Rings 4 in demselben gebildeten Abstufung anliegt. Dadurch wird die Flanke des Gewindes an der Innenfläche des Rohrstücks 3 auch gegen die Wandung der korrespondierenden Wellung des Rohres 1 gedrückt. Abschließend werden Ring 4 und Rohrstück 3 an der Stelle 5 miteinander verschweißt.

Das an die schraubenlinienförmig verlaufende Stirnfläche des Rohres 1 angrenzende Wellental desselben ist durch den bei der Erzeugung der Stirnfläche durchgeführten, axial verlaufenden Schnitt offen. Zur Abdichtung des Rohres 1 gegenüber der Umgebung kann in diesem Wellental gemäß Fig. 4 mit Vorteil ein Füllkörper 10 angebracht und mit dem Rohr 1 und dem Ring 4 fest verbunden, beispielsweise verschweißt werden. Dadurch wird die Öffnung zwischen Rohr 1 und Ring 4 geschlossen. In Fig. 4 sind in vergrößerter Darstellung nur der Ring 4 und ein Abschnitt des Rohres 1 dargestellt. Der Füllkörper 10 erstreckt sich vorzugsweise über etwa 360°. Er kann als vorgefertigtes, aus Edelstahl bestehendes Paßstück ausgeführt sein, das nur in das Wellental eingelegt zu werden braucht.

## Patentansprüche

1. Anordnung mit einem schraubenlinienförmig gewellten Rohr (1) aus Metall, das eine entlang eines Schraubengangs seiner Wellung verlaufende Stirnfläche hat, und einem an demselben zu befestigenden Verbindungselement, welches ein aus Metall bestehendes Rohrstück (3) aufweist, das eine dem Schraubengang der Wellung des Rohres entsprechende, schraubenlinienförmig verlaufende Innenfläche und eine glatte, zylindrische Außenfläche hat und in Montageposition unter Eingriff in die Wellung des Rohres auf demselben angeordnet ist, **dadurch gekennzeichnet,**
- **daß** in Montageposition ein metallischer Ring (4) unter Anlage an dem Rohrstück (3) auf demselben angeordnet und mit demselben verschweißt ist, dessen Innenfläche zwei axial hintereinander angeordnete Abschnitte (6,7) mit unterschiedlichem Innendurchmesser aufweist,
- **daß** der Ring (4) mit seinem den größeren Innendurchmesser aufweisenden Abschnitt (6) auf dem Rohrstück (3) und mit seinem den kleineren Innendurchmesser aufweisenden Abschnitt (7) auf der der Stirnseite des Rohres (1) zugewandten Seite des Rohrstücks (3) auf dem Rohr (1) aufliegt,
- **daß** der Abschnitt (7) des Rings (4) mit dem kleineren Innendurchmesser eine dem Verlauf des Schraubengangs des Rohrs (1) entsprechende, entlang einer Schraubenlinie verlaufende Stirnfläche hat und
- **daß** der Ring (4) an seiner schraubenlinienförmig verlaufenden Stirnfläche mit der Stirnfläche des Rohres (1) verschweißt ist.

2. Anordnung nach Anspruch 1, **dadurch gekennzeichnet, daß** der Ring (4) im Bereich seines Abschnitts (7) mit dem kleineren Innendurchmesser einen axial verlaufenden, im Verhältnis zu seiner sonstigen Wandstärke dünnwandigen Ansatz (8) mit einer Stirnfläche aufweist, deren Verlauf dem Verlauf der Stirnfläche des Rohres (1) entspricht.

3. Anordnung nach Anspruch 1 oder 2, **dadurch gekennzeichnet, daß** in dem an die Stirnfläche des Rohres (1) angrenzenden Wellental desselben ein Füllkörper (10) angebracht ist.

4. Verfahren zur Montage eines Verbindungselements am Ende eines schraubenlinienförmig gewellten Rohres (1) aus Metall in einer Anordnung nach Anspruch 1, **dadurch gekennzeichnet,**
- **daß** das Rohr (1) zunächst an einem Ende entlang eines Schraubengangs abgetrennt wird, mit einem den Anfang und das Ende des Schraubengangs nach einem Umlauf verbindenden Schnitt in axialer Richtung,
- **daß** auf das Rohr (1) anschließend ein mit einer schraubenlinienförmig verlaufenden Innenfläche versehenes Rohrstück (3) aus Metall aufgeschraubt wird, das eine glatte, zylindrische Außenfläche hat,
- **daß** danach auf das Rohrstück (3) ein zwei Abschnitte (6,7) mit unterschiedlichem Innendurchmesser aufweisender, metallischer Ring (4) mit seinem im Durchmesser größeren Abschnitt (6) aufgeschoben wird, der mit seinem im Durchmesser kleineren Abschnitt (7) auf dem Rohr (1) aufliegt und an diesem Abschnitt eine einem Schraubengang des Rohres entsprechende, entlang einer Schraubenlinie verlaufende Stirnfläche hat,
- **daß** der Ring (4) dann an seiner schraubenlinienförmig verlaufenden Stirnfläche mit der Stirnfläche des Rohres (1) verschweißt wird und
- **daß** der Ring (4) abschließend mit dem Rohrstück (3)verschweißt wird.

## Claims

1. Arrangement with a helically corrugated tube (1) of metal, which has an end face expending along a helicaltum of the thread of its corrugation and with a connecting element to be fastened to the tube, which connecting element comprises a piece of a tube (3) ofmetalwhich has a helically extending inner surface corresponding to the helical thread of the corrugation of the tube, and a smooth cylindrical outer surface, and which connecting element in mo unting p o sitio n is placed on the tube with penetrating into the corrugation ofthe same, characterized in
- thatinmounting position a metal ring (4) is placed on the piece of a tube (3), with contactto the same and welded to the same, wherein the inner surface of the ring hastwo sections (6,7) with different inner diameters arranged axially one behind the other,
- that the ring (4) re sts on the piece of a tube (3) with its se c tio n (6) having the greater inner diameter, and rests on the tube (1) with its se c tio n (7) having the smaller inner diameter on the side ofthe piece of a tube (3) facing the end face of the tube (1),
- that the section (7) of the ring (4) with the smaller inner diameter has an end face running along a helical line corresponding to the course of the turn ofthe thread ofthe tube (1) and
- that the ring (4) is we ld e d at its helically running end face to the end face ofthe tube (1).

2. Arrangement according to claim 1, **characterized in that** the ring (4) in the area of its section (7) with the smaller diameter has an axially extending rim (8) with a reduced wall thickness in comparison to its other wall thickness and an end face with a shape which corresponds to the shape ofthe tube (1).

3. Arrangement according to claim 1 or 2, **characterized in that** a filler (10) is placed in the wave trough of the tube (1) neighbouring the end face of the same.

4. Method for the mounting of a connecting elementatthe end of a helically corrugated tube (1) of metal in an arrangement according to claim 1, **characterized in**
- **that** the tube (1) at first is cut at its one end along a screw thread, with a cut in axial direction between the start and the end ofone completed screw thread,
- **that** then a piece of a tube (3) of metal is screwed onto the tube (1) which has a helically extending inner surface and a smooth cylindric alouter surface,
- **that** there after a metal ring (4), which has two se c tio ns (6,7) with different inner diameters, is placed on the piece of a tube (3) with its section (6) having the greaterdiameter, which abuts to the tube (1) with its se c tio n (7) having the smaller diameter and which has at this section an end face running along a screw thread corresponding to the screw thread of the tube,
- **that** the ring (4) the n is welded with its end face running along a screw thread to the end face of the tube (1) and
- **that** the ring (4) finally is welded to the piece of a tube (3).

## Revendications

1. Agencement comprenant un tuyau métallique (1) ondulé sous forme hélicoïdale, présentant une surface frontale s'étendant le long d'un pas de filetage de son ondulation, et un élément de liaison devant être fixé audit tuyau, lequel élément de liaison présente une pièce tubulaire métallique (3) qui présente une surface intérieure s'étendant sous forme hélicoïdale, correspondant au pas de filetage de l'ondulation du tuyau et une surface extérieure cylindrique lisse et qui, dans la position de montage, est en prise avec le tuyau dans l'ondulation de ce dernier, **caractérisé en ce que**
- dans la position de montage, une bague métallique (4) est disposée sur la pièce tubulaire (3) en appui contre celle-ci et est soudée à celle-ci, sa surface intérieure présentant deux portions (6, 7) disposées axialement l'une derrière l'autre et de diamètres intérieurs différents,
- la bague (4) repose sur le tuyau (1) avec sa portion (6) présentant le plus grand diamètre intérieur sur la pièce tubulaire (3) et avec sa portion (7) présentant le plus petit diamètre intérieur du côté de la pièce tubulaire (3) tourné vers le côté frontal du tuyau (1),
- la portion (7) de la bague (4) ayant le plus petit diamètre intérieur présente une surface frontale correspondant à l'allure du pas de filetage du tuyau (1), s'étendant le long d'une ligne hélicoïdale et
- la bague (4) est soudée à la surface frontale du tuyau (1) sur sa surface frontale s'étendant sous forme hélicoïdale.

2. Agencement selon la revendication 1, **caractérisé en ce que** la bague (4) présente dans la région de sa portion (7) ayant le plus petit diamètre intérieur une saillie (8) s'étendant axialement et à paroi mince par rapport au reste de l'épaisseur de sa paroi, avec une surface frontale dont l'allure correspond à l'allure de la surface frontale du tuyau (1).

3. Agencement selon la revendication 1 ou 2, **caractérisé en ce qu'**un corps de remplissage (10) est monté dans le creux d'ondulation du tuyau adjacent à la surface frontale du tuyau (1).

4. Procédé de montage d'un élément de liaison au niveau de l'extrémité d'un tuyau métallique ondulé de forme hélicoïdale (1) dans un agencement selon la revendication 1, **caractérisé en ce que**
- le tuyau (1) est d'abord sectionné au niveau d'une extrémité le long d'un pas de filetage, avec une coupe dans la direction axiale reliant le début et la fin du pas de filetage après un tour,
- une pièce tubulaire métallique (3) pourvue d'une surface intérieure s'étendant sous forme hélicoïdale est vissée sur le tuyau (1) et présente une surface extérieure cylindrique lisse,
- une bague métallique (4) présentant deux portions (6, 7) de diamètres intérieurs différents est ensuite enfilée sur la pièce tubulaire (3) par sa portion de plus grand diamètre (6), qui repose sur le tuyau (1) avec sa portion (7) de plus petit diamètre et présente au niveau de cette portion une surface frontale correspondant au pas de filetage du tuyau et s'étendant le long d'une ligne hélicoïdale,
- la bague (4) est ensuite soudée au niveau de sa surface frontale s'étendant sous forme hélicoïdale à la surface frontale du tuyau (1) et
- la bague (4) est enfin soudée à la pièce tubulaire (3).
